# FASCICULE DE BREVET EUROPEEN

(11) **EP 1 723 027 B1**
(45) Date de publication et mention de la délivrance du brevet: **12.09.2007**
(21) Numéro de dépôt: 04742800.8
(22) Date de dépôt: 21.05.2004
(51) Int. Cl.: B62D 63/06, B62D 21/20

(54) **REMORQUE ROUTIERE POLYVALENTE ET EVOLUTIVE**
POLYVALENTER UND MODULÄRER ANHÄNGER
MULTIPORPOSE AND EVOLUTIVE ROAD TRAILER

(30) Priorité: 11.03.2004 FR 0402536
(43) Date de publication de la demande: 22.11.2006
(73) Titulaire: Duval, Bernard, 18100 Vierzon (FR)
(72) Inventeur: Duval, Bernard, 18100 Vierzon (FR)
(74) Mandataire: Dronne, Guy
(86) Numéro de dépôt international: PCT/FR2004/001259
(87) Numéro de publication internationale: WO 2005/097586

(56) Documents cités:
- DE-A- 10 013 239
- GB-A- 2 164 608
- GB-A- 2 359 281

## Description

L'invention concerne le domaine des remorques routières destinées à être tractées par un véhicule automobile.

Elle concerne plus précisément une remorque comportant au moins un essieu transversal relié à deux roues par des bras de suspension latéraux, une flèche pour son accrochage au véhicule, et présentant un cadre rectangulaire supportant un plancher et éventuellement des ridelles, ledit cadre ayant deux longerons parallèles, une traverse avant et une traverse arrière.

Ces remorques, tractées par des véhicules, sont couramment utilisées pour le transport de bagages, de matériaux ou d'engins.

Ces remorques et notamment le cadre sont généralement réalisés à partir de poutrelles métalliques, découpées à la bonne longueur et soudées entre elles. Ces opérations, notamment l'opération de soudure, nécessitent des postes de soudure et du personnel qualifié. Ces opérations ne peuvent être effectuées que dans des ateliers équipés d'outillages lourds et spécifiques. Ensuite, le transport des remorques complètement assemblées vers les clients nécessite une logistique importante. Une remorque conformément au préambule de la revendication 1 est décrite par le document DE 10013239 A.

Le but de l'invention est de proposer une remorque qui puisse être facilement assemblée sans soudure à partir de pièces élémentaires peu encombrantes, et livrée au client en partie en pièces détachées.

L'invention atteint son but par une remorque telle que revendiquée.

Grâce à cette disposition, le montage du cadre se fait par assemblage des longerons et des traverses à l'aide des pièces d'angle sans autre outil qu'une clé. Les longerons et les traverses peuvent être découpés à la bonne longueur dans des ateliers spécialisés pour ce travail, et transportés sur les lieux de montage en tant que produits filiformes, ce qui diminue notablement le volume pour leur transport. Les pièces d'angle et les poteaux peuvent être réalisés dans d'autres ateliers.

De manière avantageuse, les poteaux sont réalisés à partir d'un profilé présentant deux rainures orthogonales et sont équipés à leur extrémité inférieure d'une pièce de montage sur une pièce d'angle.

Cette pièce de montage présente une partie inférieure qui s'emboîte dans l'orifice d'une pièce d'angle et une partie supérieure qui s'emboîte dans l'extrémité inférieure d'un profilé de poteau.

La pièce de montage comporte en outre des moye ns de positionnement angulaire et des moyens de clippage qui coopèrent respectivement avec des moyens conjugués de positionnement angulaire et de clippage prévus sur les pièces d'angle et les extrémités inférieures des profilés de poteau.

De préférence, les moyens de positionnement angulaire comportent une rainure verticale prévue sur l'une des pièces et une protubérance prévue sur l'autre pièce.

Les moyens de clippage comportent une protubérance formée sur une languette élastique de la pièce de montage et qui est susceptible de pénétrer dans un trou ou une fente ménagée dans un profilé de poteau ou la pièce d'angle.

Avantageusement les ridelles présentent sur leur bord inférieur des moyens susceptibles de coulisser dans la rainure supérieure d'un longeron ou de la traverse avant lors du montage.

D'autres avantages et caractéristiques de l'invention ressortiront à la lecture de la description suivante, faite à titre d'exemple et en référence aux dessins annexés dans lesquels :
la figure 1 est une vue en perspective d'une remorque routière conforme à l'invention ;
la figure 2 est une vue en perspective de la remorque de la figure 1, sans les ridelles, les poteaux d'angle et le plancher ;
la figure 3 est une coupe d'un profilé pour réaliser les longerons et les traverses ;
la figure 4 est une vue en perspective d'un longeron supportant le plancher et dont la rainure inférieure comporte des têtes de boulons ;
la figure 5 est une vue en perspective d'une pièce d'angle ;
la figure 6 est une vue en perspective et éclatée d'une pièce d'angle emboîtée dans un longeron et une traverse, d'un poteau avec sa pièce de montage et d'un couvercle de poteau ;
la figure 7 est une coupe d'un poteau avant ;
la figure 8 montre un bouchon de pièce d'angle;
les figures 9A à 9D montrent le montage de différents types de ridelles sur un longeron et la traverse avant ;
la figure 10 montre, partiellement en éclaté, une remorque comportant des poutres raidisseuses sous les longerons ;
la figure 11 est une vue latérale de la remorque de la figure 10 ;
la figure 12 montre l'emboîtement de l'extrémité d'une traverse intermédiaire dans un longeron ;
la figure 13 est une vue latérale de la ridelle arrière ;
la figure 14 est une vue en perspective d'une remorque plateau ;
la figure 15 est une vue en perspective d'une remorque équipée de ridelle ; et
les figures 16A et 18B illustrent en vue de coté et en vue de face les possibilités d'empilage de plusieures remorques.

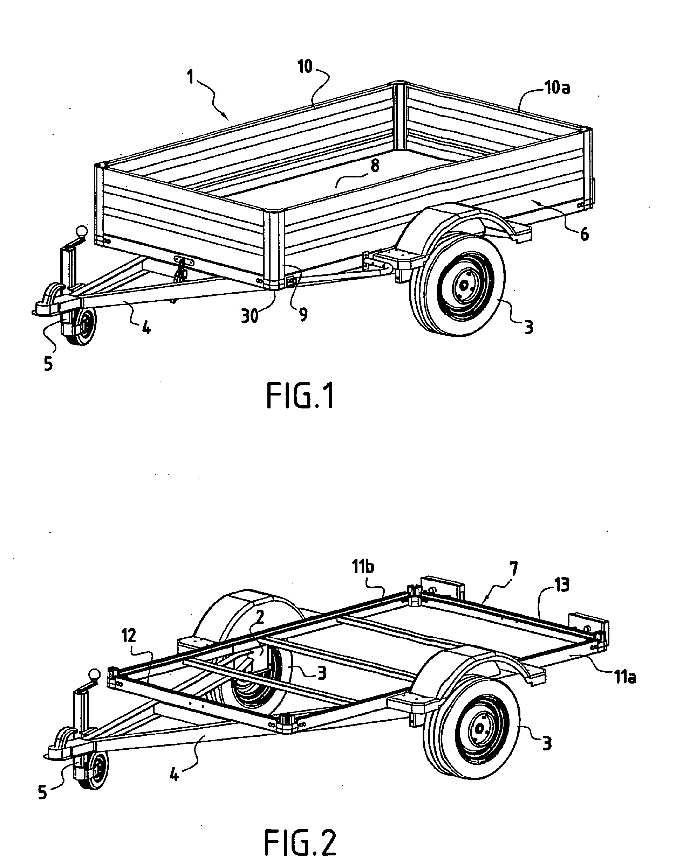

Les figures 1 et 2 montrent une remorque 1 destinée à être tractée par un véhicule automobile, qui comporte un essieu 2 relié à deux roues 3 par des bras de suspension et relié à une flèche 4 en V destinée à l'accrochage de ladite remorque à l'arrière d'un véhicule, l'extrémité avant de ladite flèche 4 comportant une béquille 5 réglable en hauteur. Sur l'essieu 2 et la flèche 4 est monté un plateau constitué d'un cadre rectangulaire 7 supportant un plancher 8, et éventuellement une caisse 6 constituée de quatre poteaux d'angle 9 et de ridelles 10, la ridelle arrière 10a étant, de préférence, montée pivotante autour d'un axe inférieur transversal.

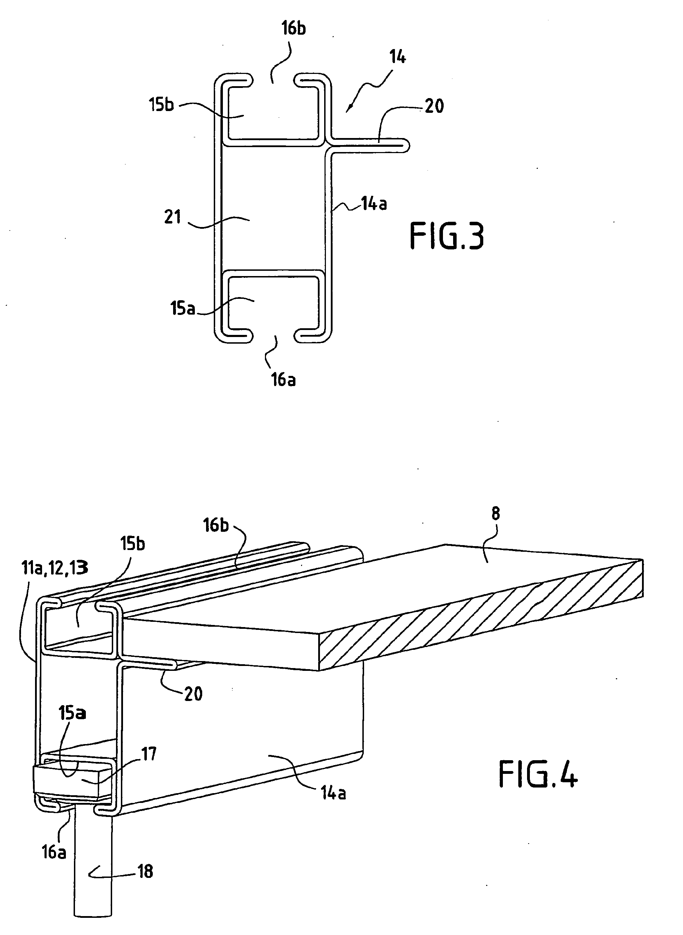

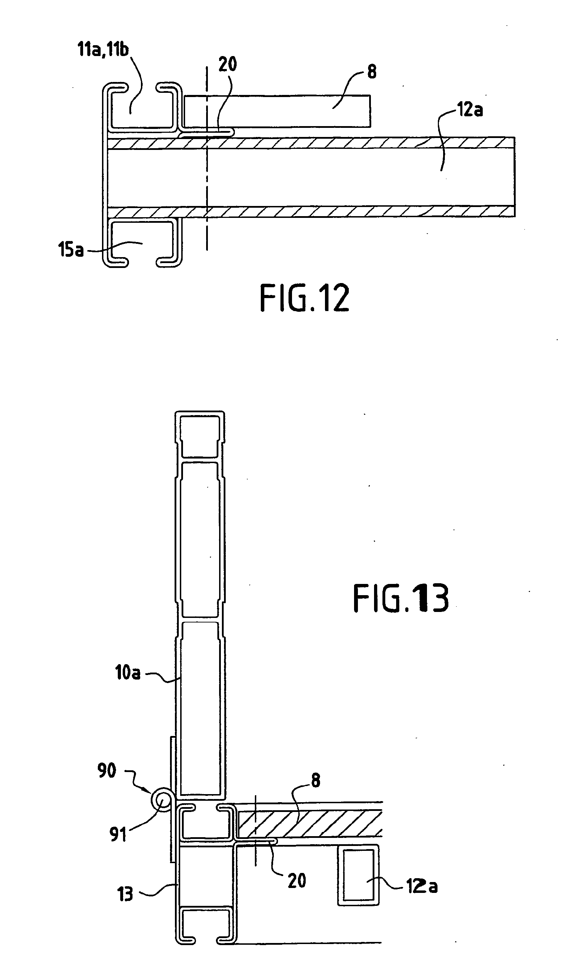

Le cadre 7 comporte deux longerons parallèles 11a, 11b, une traverse avant 12 et une traverse arrière 13. Les longerons 11a, 11b et les traverses 12 et 13 sont réalisés à partir d'un profilé 14, montré sur les figures 3 et 4, de section globalement rectangulaire, qui présente dans sa région supérieure et dans sa région inférieure, deux rainures référencées 15a dans la région inférieure et 15b dans la région supérieure, qui débouchent respectivement sur les faces inférieure et supérieure du profilé 14 par des gorges longitudinales 16a et 16b. Les rainures 15a sont susceptibles d'immobiliser en rotation des têtes 17 de boulons 18, dont le fût passe par la gorge 16a. La rainure 15b est susceptible de recevoir des ridelles de la remorque. Le profilé 14 présente en outre sur une face latérale 14a, destinée à être disposée du côté intérieur du cadre 7, une ailette 20 disposée sensiblement dans le plan du fond de la rainure supérieure 15b et destinée à supporter le plancher 8, ce dernier étant fixé sur les longerons 11a, 11b, et sur les traverses 12 et 13 par rivetage. Les longerons 11a, 11b et les traverses 12, 13, présentent ainsi entre les fonds des rainures 15a et 15b une cavité interne 21 ouverte aux extrémités du profilé 14. La face latérale interne 14a des longerons 11a, 11b, peut également présenter sous les ailettes 20, des ouvertures destinées à recevoir les extrémités de traverses intermédiaires 12a reliant les longerons 11a, 11b et parallèles aux traverses avant 12 et arrière 13, ainsi que cela est montré sur la figure 12. La face inférieure des extrémités des traverses intermédiaires 12a est en appui sur le fond de la rainure inférieure 15a des longerons 11a, 11b, tandis que les ailettes 20 des longerons 11a, 11b sont en appui sur la face supérieure des traverses intermédiaires 12a. Des rivets permettent de fixer entre eux le plancher 8, les ailettes 20 et les traverses intermédiaires 12a.

Les longerons 11a, 11b et les traverses 12 et 13 sont reliés entre eux à leurs extrémités adjacentes, par des pièces d'angle 30 ou équerres, qui comportent chacun deux bras 31a, 31b, orthogonaux entre eux qui peuvent s'emboîter dans les cavités 21 et 15a aux extrémités adjacentes d'un longeron et d'une traverse. Ces bras 31a, 31b présentent des trous 32 en regard de trous ménagés dans les parois latérales aux extrémités des longerons et des traverses, pour la fixation des équerres 30 par boulonnage.

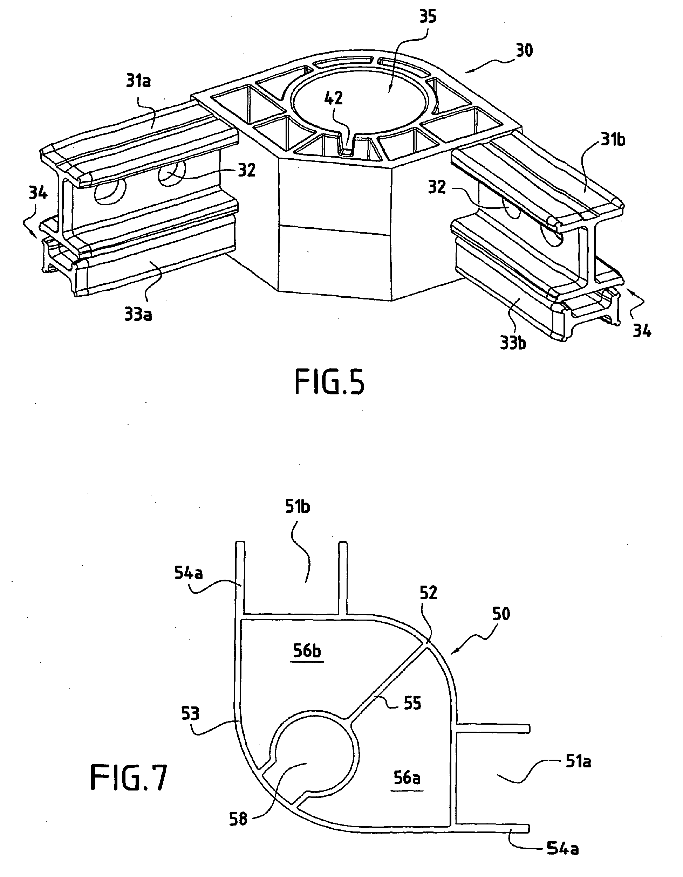

Ainsi que cela est montré sur la figure 5, les équerres comportent deux paires de bras superposés 31a, 33a et 31b, 33b et orthogonaux entre eux, séparés par une fente 34, les bras supérieurs 31a, 31b logeant dans les cavités 21 où et les rainures 15a et les bras inférieurs 33a, 33b logeant dans les rainures inférieures 15a d'un longeron 11a ou 11b et d'une traverse 12 ou 13, la paroi séparant la rainure 15a de la cavité 21 logeant dans une fente 34.

Chaque pièce d'angle ou équerre 30 présente en outre un orifice traversant 35 globalement cylindrique et perpendiculaire au plan défini par les bras 31a et 31b. Cet orifice 35 est destiné à accueillir la partie inférieure 40a d'une pièce de montage 40, dont la partie supérieure 40b s'emboîte dans une cavité prévue à l'extrémité inférieure d'un profilé de poteau 9.

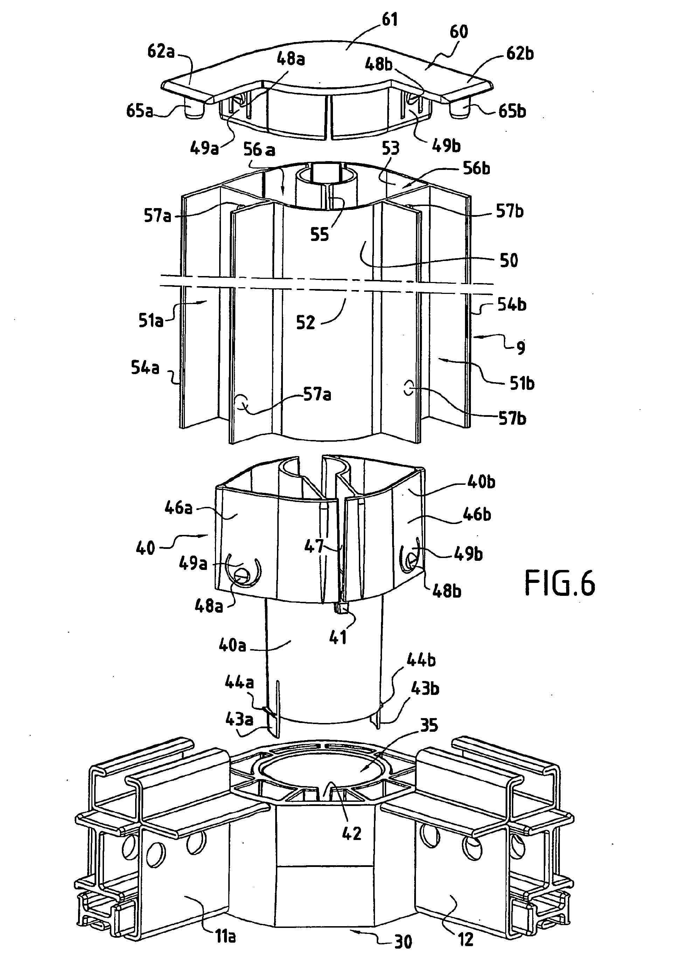

Ainsi que cela est visible sur la figure 6, la partie inférieure 40a de la pièce de montage 40 est globalement cylindrique et a un diamètre sensiblement égal ou légèrement inférieur au diamètre de l'orifice 35. Elle présente dans sa zone supérieure un téton 41 qui vient loger dans une échancrure 42 ménagée dans la zone supérieure de la paroi délimitant l'orifice 35. La partie inférieure 40a présente en outre à son extrémité inférieure des languettes élastiques 43a, 43b qui présentent sur leur face externe des protubérances ou crochets 44a, 44b destinés à coopérer avec des fentes ménagées dans la paroi délimitant l'orifice 35 ou avec l'extrémité inférieure de cette paroi pour immobiliser la pièce de montage 40 lorsqu'elle est montée sur une équerre 30.

Le téton 41 et l'échancrure 42 assurent le positionnement angulaire de la pièce de montage 40 par rapport à l'équerre 30, et permettent un montage en aveugle. Lorsque le téton 41 est positionné dans l'échancrure 42, les protubérances 44a et 44b s'écartent radialement du fait de l'élasticité des languettes 43a et 43b, et immobilisent la pièce de montage 40 sur la pièce d'angle 30 par clippage. Lors du coulissement de la partie inférieure 40a de la pièce de montage 40 dans l'orifice 35, les protubérances 44a et 44b sont escamotées dans l'orifice 35 du fait de l'élasticité des languettes 43a et 43b.

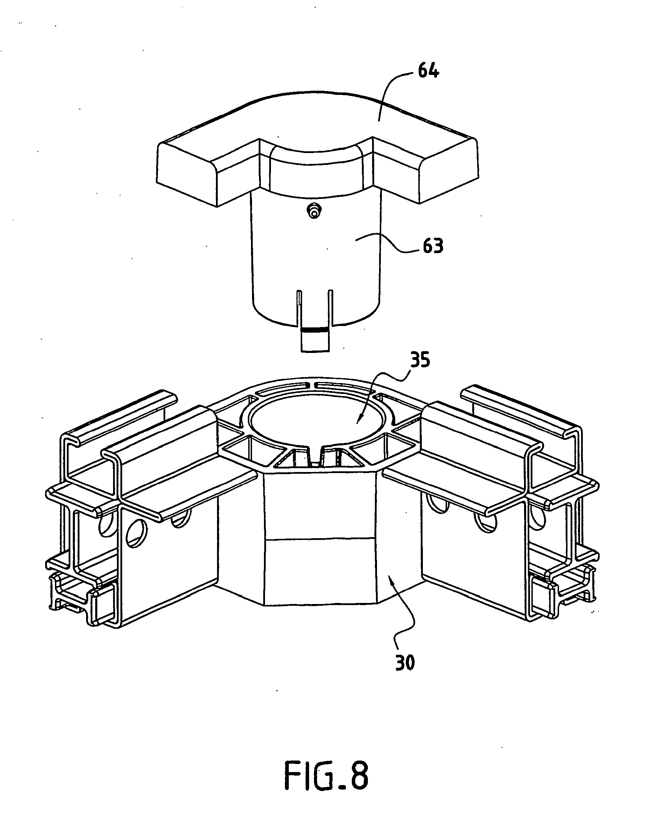

Chaque poteau 9 est réalisé à partir d'un profilé 50 dont la section est montrée sur la figure 7. Cette section est adaptée en fonction de la géométrie de la pièce d'angle 30. Ce profilé comporte notamment deux rainures orthogonales 51a, 51b, de section en U destinées à loger et retenir les bords latéraux de deux ridelles adjacentes, une paroi 52 en forme de quart de cylindre raccordant les fonds des deux rainures 51a et 51b ; et qui est destinée à reposer sur la paroi délimitant l'orifice 35 d'une pièce d'angle 30, et une paroi 53 raccordant les ailes externes 54a et 54b des rainures 51a et 51b et épousant la paroi externe des pièces d'angle 30 après le montage des pièces de montage 40 et des profilés 50 des poteaux 9. Les parois 52 et 53 sont reliées par un voile de rigidification 55 qui délimite l'intérieur d'un poteau 9 en au moins deux cavités 56a et 56b sensiblement symétriques par rapport au voile 55. De préférence, le voile 55 délimite en plus près de la paroi extérieure 53 une cavité cylindrique 58 à l'extrémité supérieure de laquelle peuvent s'emboîter les extrémités des arceaux d'une bâche recouvrant la caisse 6.

La partie supérieure 40b de la pièce de montage 40 est destinée à loger dans les cavités 56a et 56b à l'extrémité inférieure d'un profilé de poteau 9. A cet effet, la partie supérieure 40b comporte deux blocs 46a et 46b séparés par une fente 47 destinée à loger le voile 55. Les blocs 46a et 46b sont disposés symétriquement de part et d'autre de cette fente 47 et ont une configuration adaptée à la configuration des cavités 56a et 56b. Les parois périphériques des blocs 46a et 46b comportent en outre des protubérances 48a et 48b aux extrémités inférieures de languettes élastiques 49a et 49b. Ces protubérances 48a et 48b sont destinées à pénétrer dans des trous 57a, 57b ménagés dans les fonds des rainures 51a, 51b du profilé de poteau 9, pour immobiliser le poteau 9 après son montage.

Un couvercle 60 peut être monté à l'extrémité supérieure du poteau 9. La partie inférieure de ce couvercle 60 est semblable à la zone inférieure de la partie supérieure 40b de la pièce de montage 40. Elle comporte notamment des protubérances 48a et 48b sur des languettes élastiques 49a et 49b susceptibles de coopérer avec des trous 57a et 57b prévus à l'extrémité supérieure du poteau 9. La paroi supérieure 61 du couvercle 60 présente des extensions orthogonales 62a, 62b qui viennent recouvrir les rainures 51a et 51b du poteau 9. Ces extensions présentent sur leur face inférieure des tétons 65a, 65b qui servent à verrouiller les ridelles 10. La paroi supérieure 61 peut présenter un orifice dans le prolongement de la cavité cylindrique 58 des profilés de poteau 50.

La figure 8 montre un bouchon de plateau 64 qui s'adapte directement sur une pièce d'angle 30. Ce bouchon 64 comporte une partie inférieure 63 identique à la partie inférieure 40a de la pièce de montage. Ce bouchon 60 est utilisé lorsque la remorque comporte uniquement un plateau sans ridelles. Les rainures supérieures 15b des longerons et traverses servent alors d'ancrage à des dispositifs de fixation de sangles ou autres.

Il est à noter que sur les poteaux arrières 9 de la remorque, l'aile 54a de la rainure 51a peut être supprimée afin de transformer la rainure 51a en une feuillure recevant un bord latéral d'une ridelle arrière basculante.

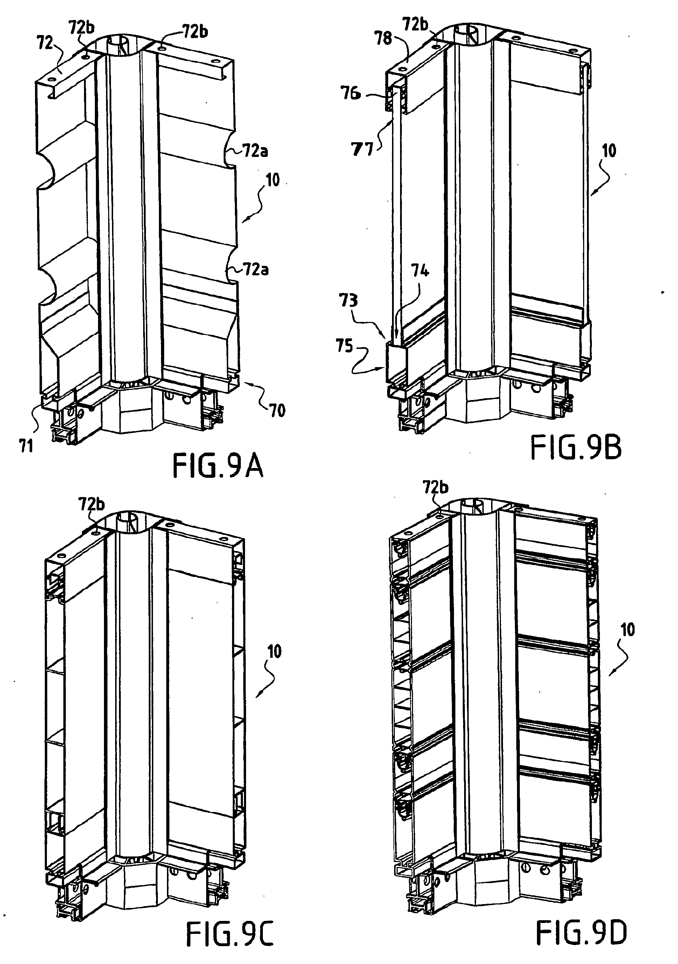

Les figures 9A à 9D montrent différents types de ridelles 10 susceptibles d'être montées sur les longerons 11a et 11b et la traverse avant 12. Elles peuvent également être montées sur la traverse arrière 13, mais de préférence la ridelle arrière 10a est une porte montée basculante autour d'un axe horizontal sur la traverse arrière 13.

La particularité des ridelles 10 suivant l'invention, est que leurs bords latéraux sont retenus dans les rainures en vis-à-vis 51a, 51b de deux poteaux 9, et que leur bord inférieur 70 comporte des moyens 71 pouvant coulisser, lors du montage, dans la rainure supérieure 15b d'un longeron 11a, 11b ou d'une traverse 12.

La figure 9A montre une ridelle 10 tirée d'une feuille de tôle mise en forme par formage à froid pour que le bord inférieur 70 présente une configuration complémentaire à celle de la rainure 15b. Son bord supérieur 72 présente des retours de tôle qui s'engagent dans les rainures 51a et 51b des poteaux 9. Ces retours 72 présentent à leurs extrémités des trous 72b pour recevoir les tétons 65a et 65b des couvercles 60. La ridelle 10 présente en outre des ondulations de rigidification horizontales 72a de section demi-cylindrique.

La figure 9B montre une ridelle 10 réalisée à partir d'une plaque en bois dont le bord inférieur 73 s'engage dans la rainure supérieure 74 d'un profilé 75 dont la partie inférieure s'engage par coulissement dans la rainure supérieure 15b d'un longeron 11a, 11b ou d'une traverse 12, 13. Le bord supérieur 76 de la plaque en bois est également engagé dans la rainure 77 d'un profilé 78 dont la largeur est égale à la largeur des rainures 51a et 51b des poteaux 9 et qui présente également des trous 72b pour recevoir les tétons 65a, 65b des couvercles 60.

La figure 9C montre un troisième type de ridelle, réalisé en aluminium ou dans un matériau plastique, en une seule pièce ou en plusieurs pièces s'emboîtant les unes au-dessus des autres. Le bord inférieur de ces ridelles 10 est configuré de manière à permettre son montage sur un longeron ou une traverse par coulissement.

La figure 9D montre un quatrième exemple de ridelle, réalisé en matériau plastique par extrusion et qui comporte plusieurs éléments superposés s'emboîtant les uns dans les autres.

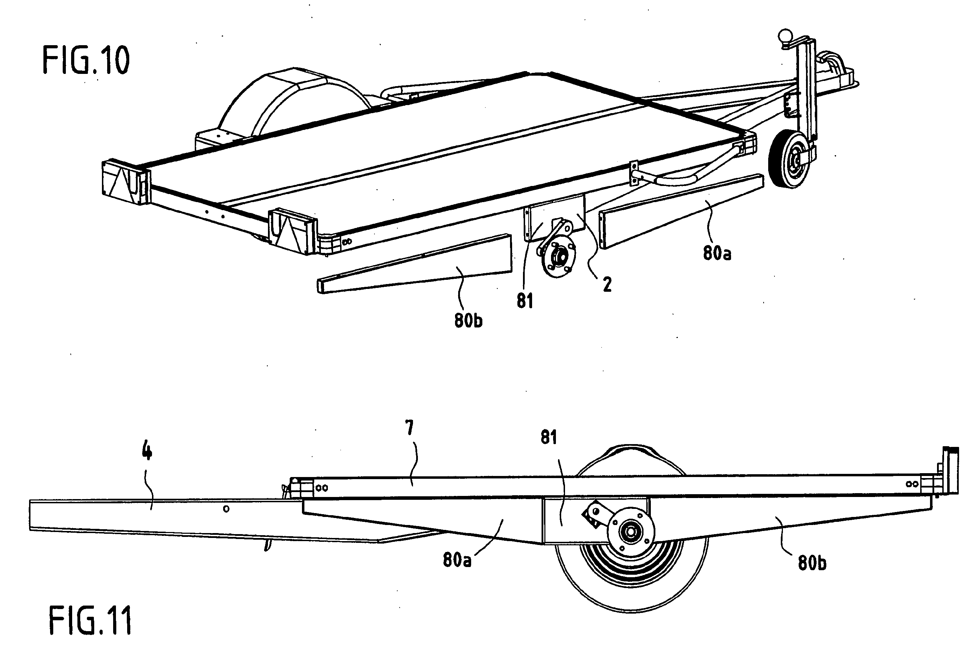

Les figures 10 et 11 montrent une remorque 1 dans laquelle les longerons 11a et 11b sont renforcés par deux poutres raidisseuses situées l'une 80a à l'avant et l'essieu 2 et l'autre 80b à l'arrière de l'essieu 2. Ces poutres 80a et 80b en forme de U renversé de 90° comportent sur leur aile supérieure une pluralité de trous pour le passage de boulons dont les têtes 17 sont emprisonnées dans la rainure inférieure 15a des longerons 11a et 11b. Les extrémités voisines des deux poutres 80a et 80b comportent des retours qui présentent des perçages pour leur fixation par boulonnage sur les flancs latéraux des platines 81 de l'essieu 2, afin de former une poutre unique sous le plateau de la remorque. La section des poutres 80a et 80b est calculée en fonction de la charge susceptible d'être transportée par la remorque. Dans l'exemple montré sur la figure 10, la remorque 1 ne comporte qu'un seul essieu 2. Il est évident que cette remorque pourrait comporter des essieux en tandem sans sortir du cadre de l'invention.

La figure 13 montre un exemple de montage d'une ridelle arrière 10a sur la traverse arrière 13 au moyen de charnières 90 présentant un axe d'articulation 91 horizontal.

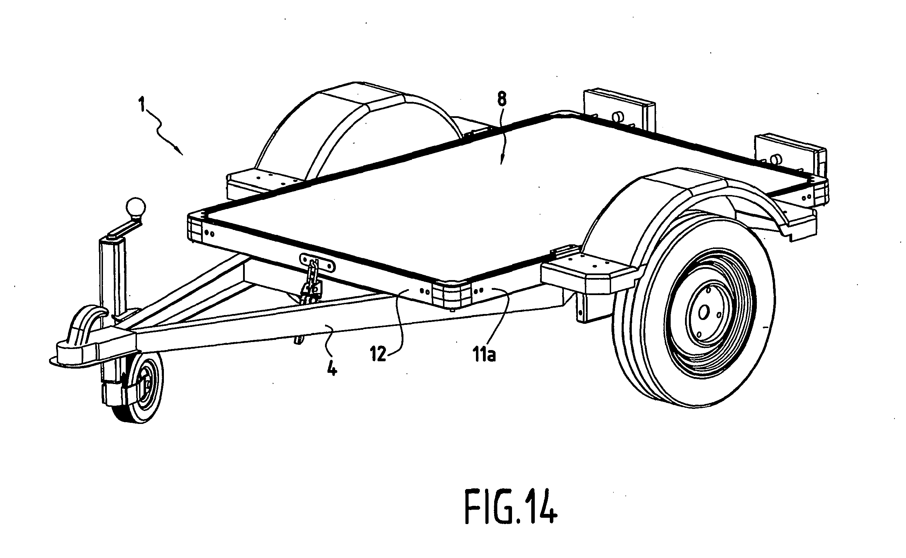

La figure 14 montre une remorque sans ridelles. Les pièces d'angle 30 sont recouvertes par des bouchons 64 dont la face supérieure est dans la continuité du plancher 8 Dans le cas où cette remorque est utilisée pour le transport d'engins, le plancher 8 peut être équipé de cales de blocage des roues de l'engin, et des rampes de chargement peuvent être montées articulées sur la traverse arrière 13.

Il est à noter en outre que les ridelles 10 peuvent être mises en place par coulissement sur les longerons 11a et 11b et la traverse 12 avant de mettre en place la pièce de montage 40 et les poteaux 9.

Les longerons 11a, 11b et les traverses 12 et 13 sont réalisés par profilage à froid de feuillards métalliques. Les pièces d'angle 30 et les pièces de montage 40 sont réalisées de préférence par moulage d'une matière plastique ou d'un métal, tel que l'aluminium ou un alliage d'aluminium.

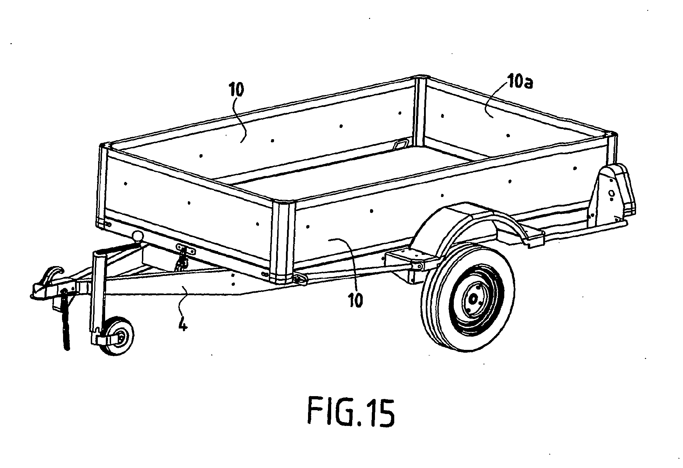

La figure 15 montre une remorque équipée de ses ridelles 10 et 10a.

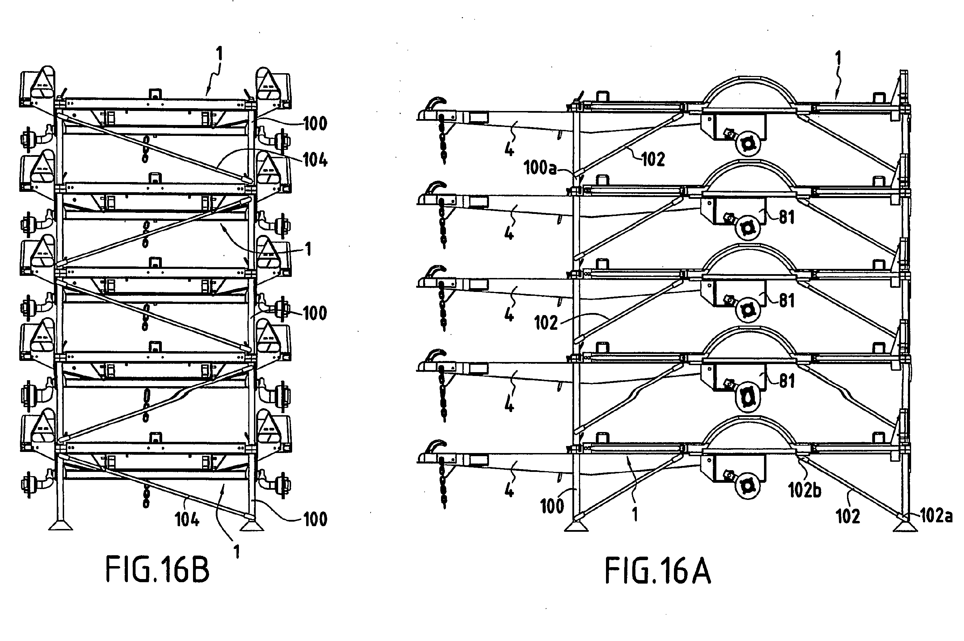

Les figures 16A et 16B illustrent un autre avantage de l'invention qui consiste dans la possibilité d'empiler les remorques déjà assemblées pour leurs parties essentielles.

Comme le montrent ces figures les remorques sont déjà équipées de leur flèche 4 et des platines d'essieu 81.

En revanche, les ridelles 10, 10a, les poteaux d'angle 9 et les roues sont enlevés.

L'empilage est rendu possible en utilisant des éléments de montant 100 dont les extrémités sont engagées dans les orifices 35 des pièces d'angle 30 respectivement de deux remorques adjacentes. Pour rigidifier les éléments de montants 100 on prévoit des bracons 102 dont une extrémité 102a est fixée sur l'élément de montant et dont l'autre extrémité 102b est fixée dans la rainure inférieure 15a du cadre 7 de la remorque.

Deux bracons transversaux 104 sont également prévus.

## Revendications

1. Remorque routière destinée à être tractée par un véhicule automobile et comportant au moins un essieu transversal (2) relié à deux roues (3) par deux bras de suspension latéraux, une flèche (4) pour son accrochage au véhicule, une caisse (6) montée sur l'essieu et la flèche et présentant un cadre (7) rectangulaire supportant un plancher (8) et des ridelles (10), ledit cadre ayant deux longerons parallèles (11a, 11b), une traverse avant (12) et une traverse arrière (13),
les longerons (11a, 11b) et les traverses (12, 13) sont réalisés à partir de profilés métalliques (14) et sont reliés à leurs extrémités adjacentes au moyen de pièces d'angle (30) présentant deux bras perpendiculaires (31a, 31b) qui s'emboîtent respectivement dans lesdites extrémités adjacentes et qui présentent en outre un orifice traversant (35) perpendiculaire au plan desdits bras, lesdits longerons (11a, 11b) et lesdites traverses (12, 13) comportant sur leur face interne une ailette (20) qui s'étend vers l'intérieur du cadre (7) et qui est destinée à supporter le plancher (8), et **caractérisée par le fait que** les faces inférieure et supérieure des longerons et des traverses comportent une rainure (15a, 15b) débouchant par une gorge (16a, 16b) et susceptible de recevoir et immobiliser en rotation des têtes (17) de boulons et les bords inférieurs des ridelles, et **par le fait qu'**elle comporte en outre quatre poteaux d'angle (9) tubulaires dont les extrémités inférieures s'emboîtent dans les orifices (35) des pièces d'angle (30), lesdits poteaux (9) présentant deux rainures verticales (51a, 51b), dans des plans orthogonaux, destinées à recevoir les bords latéraux des ridelles (10).

2. Remorque selon la revendication 1, **caractérisée par le fait que** les poteaux (9) sont réalisés à partir d'un profilé (50) présentant deux rainures orthogonales (51a, 51b) et sont équipés à leur extrémité inférieure d'une pièce de montage (40) sur une pièce d'angle (30).

3. Remorque selon la revendication 2, **caractérisée par le fait que** la pièce de montage (40) présente une partie inférieure (40a) qui s'emboîte dans l'orifice (35) d'une pièce d'angle (30) et une partie supérieure (40b) qui s'emboîte dans l'extrémité inférieure d'un profilé (50) de poteau (9).

4. Remorque selon la revendication 3, **caractérisée par le fait que** la pièce de montage (40) comporte des moyens de positionnement angulaire (41, 47) et des moyens de clippage (43a, 43b, 48a, 48b) qui coopèrent respectivement avec des moyens conjugués de positionnement angulaire (42, 55) et de clippage (57a, 57b) prévus sur les pièces d'angle (30) et les extrémités inférieures des profilés de poteaux (9).

5. Remorque selon la revendication 4, **caractérisée par le fait que** les moyens de positionnement angulaire comportent une rainure verticale (42, 47) prévue sur l'une des pièces et une protubérance (41, 55) prévue sur l'autre pièce.

6. Remorque selon l'une des revendications 4 ou 5, **caractérisée par le fait que** des moyens de clippage comportent une protubérance (48a) formée sur une languette élastique (49a) de la pièce de montage (40) et qui est susceptible de pénétrer dans un trou (57a, 57b) ou fente ménagé dans le profilé de poteau (9) ou la pièce d'angle (30).

7. Remorque selon l'une quelconque des revendications 1 à 6, **caractérisée par le fait que** les ridelles (10) présentent sur leur bord inférieur (70) des moyens (71) susceptibles de coulisser dans la rainure supérieure (15b) d'un longeron (11a, 11b) ou d'une traverse, lors du montage.

8. Remorque selon la revendication 7, **caractérisée par le fait que** les ridelles sont réalisées en une tôle mise en forme pour présenter des ondulations horizontales (72a) de rigidification.

9. Remorque selon la revendication 7, **caractérisée par le fait que** les ridelles sont réalisées à partir d'une pluralité de profilés qui s'emboîtent les uns au-dessus des autres.

10. Remorque selon la revendication 7, **caractérisée par le fait que** les ridelles sont réalisées à partir de plaques de bois qui s'emboîtent dans une rainure (74) prévue dans la partie supérieure desdits moyens (71) de coulissement susceptibles de coulisser dans la rainure supérieure des longerons ou des traverses.

11. Remorque selon la revendication 10, **caractérisée par le fait que** lesdits moyens (71) susceptibles de coulisser sont réalisés à partir d'un profilé (75).

12. Remorque selon l'une quelconque des revendications 1 à 11, **caractérisée en ce qu'**elle comprend des traverses intermédiaires (12a), les longerons (11a, 11b) présentant sur leur face interne en dessous des ailettes (20) une pluralité d'ouvertures pour recevoir les extrémités de ces traverses intermédiaires (12a), de sorte que les ailettes (20) soient en appui sur la face supérieure de ces traverses intermédiaires (12a).

13. Remorque selon la revendication 12, **caractérisée en ce que** lesdites ouvertures pour recevoir les extrémités des traverses intermédiaires (12a) sont réalisées de sorte que ces extrémités (12a) soient en appui sur le fond de la rainure inférieure (15a) des longerons (11a, 11b).

14. Remorque selon l'une quelconque des revendications 1 à 13, **caractérisée par le fait que** les longerons (11a, 11b) sont renforcés par des poutres longitudinales (80a, 80b) disposées de part et d'autre de l'essieu sous lesdits longerons et fixées à ces derniers par boulonnage, lesdites poutres (80a, 80b) étant solidaires d'une platine d'essieu (81) conçue pour former une poutre unique sous le plateau de ladite remorque.

15. Remorque selon l'une quelconque des revendications 1 à 14, **caractérisée par le fait que** les ridelles (10, 10a) et les poteaux (9) sont amovibles.

16. Remorque selon l'une quelconque des revendications 1 à 15, **caractérisée en ce que** lesdits orifices traversant (35) du cadre (7) de la remorque peuvent être utilisés pour introduire des éléments de montant (100), après enlèvement des poteaux d'angle (9), afin de permettre l'empilage de plusieurs remorques.

## Claims

1. Road trailer intended to be towed by a motor vehicle and comprising at least one cross axle (2) connected to two wheels (3) by two side suspension arms, a tongue (4) to hitch it to the vehicle, a body (6) mounted on the axle and the tongue and having a rectangular frame (7) supporting a floor (8) and sidewalls (10), said frame having two parallel side members (11a, 11b), a front cross bar (12) and a rear cross bar (13),
the side members (11a, 11b) and cross bars (12, 13) are made from metal profiles (14) and are joined at their adjacent ends by means of corner pieces (30) having two perpendicular arms (31a, 31b) which respectively fit into said adjacent ends and which also have a through orifice (35) perpendicular to the plane of said arms, said side members (11a, 11b) and said cross bars (12, 13) comprising on their inner face a fin (20) which extends inwardly towards the inside of the frame (7) and which is intended to support the floor (8), the trailer being **characterised by** the fact that the lower and upper faces of the side members and cross bars comprise a groove (15a, 15b) leading into a channel (16a, 16b) and able to receive and immobilise in rotation bolt heads (17) and the lower edges of the sidewalls, and by the fact that it also comprises four tubular corner posts (9) whose lower ends fit into the orifices (35) of the corner pieces (30), said posts (9) having two vertical grooves (51a, 51b), in orthogonal planes, intended to receive the side edges of sidewalls (10).

2. Trailer according to claim 1, **characterised by** the fact that the posts (9) are made from a profile (50) having two orthogonal grooves (51a, 51b) and are equipped at their lower end with an assembly piece (40) for assembling onto a corner piece (30).

3. Trailer according to claim 2, **characterised by** the fact that the assembly piece (40) has a lower part (40a) which fits into the orifice (35) of a corner piece (30) and an upper part (40b) which fits into the lower end of a profile (50) of a post (9).

4. Trailer according to claim 3, **characterised by** the fact that the assembly piece (40) comprises angle positioning means (41, 47) and clipping means (43a, 43b, 48a, 48b) which respectively cooperate with conjugate angle positioning means (42, 55) and clipping means (57a, 57b) provided on the corner pieces (30) and the lower ends of the post profiles (9).

5. Trailer according to claim 4, **characterised by** the fact that the angle positioning means comprise a vertical groove (42, 47) provided on one of the pieces and a protuberance (41, 55) provided on the other piece.

6. Trailer according to claim 4 or claim 5, **characterised by** the fact that the clipping means comprise a protuberance (48a) formed on an elastic tongue (49a) of the assembly piece (40) and which is able to enter into a hole (57a, 57b) or slot provided in the post profile (9) or corner piece (30).

7. Trailer according to any one of claims 1 to 6, **characterised by** the fact that the sidewalls (10) on their lower edge (70) have means (71) able to slide within the upper groove (15b) of a side member (11a, 11b) or cross bar, during assembly.

8. Trailer according to claim 7, **characterised by** the fact that the sidewalls are made in a sheet metal formed to have rigidifying horizontal ripples (72a).

9. Trailer according to claim 7, **characterised by** the fact that the sidewalls are made from a plurality of profiles which fit into each other one above the other.

10. Trailer according to claim 7, **characterised by** the fact that the sidewalls are made from wood panels which fit into a groove (74) provided in the upper part of said sliding means (71) able to slide within the upper groove of the side members or cross bars.

11. Trailer according to claim 10, **characterised by** the fact that said sliding means (71) are made from a profile (75).

12. Trailer according to any one of claims 1 to 11, **characterised in that** it has intermediate cross bars (12a), the side members (11a, 11b) comprising on their inner face underneath the fins (20) a plurality of openings to receive the ends of such intermediate cross bars (12a), such that the fins (20) bear upon the upper face of such cross bars (12a).

13. Trailer according to claim 12, **characterised in that** said openings to receive the ends of the intermediate cross bars (12a) are made such that said ends (12a) bear upon the bottom of the lower groove (15a) of the side members (11a, 11b).

14. Trailer according to any one of claims 1 to 13, **characterised by** the fact that the side members (11a, 11b) are reinforced by longitudinal beams (80a, 80b) arranged on either side of the axle under said side members and fixed to the latter by bolting, said beams (80a, 80b) being integral with an axle plate (81) designed to form a single beam under the platform of said trailer.

15. Trailer according to any one of claims 1 to 14, **characterised by** the fact that the sidewalls (10, 10a) and posts (9) are removable.

16. Trailer according to any one of claims 1 to 15, **characterised in that** said through orifices (35) of frame (7) of the trailer may be used to insert upright elements (100), after removing the corner posts (9), to allow the stacking of several trailers.

## Patentansprüche

1. Anhänger für den Straßenverkehr, der dazu bestimmt ist, von einem Kraftfahrzeug gezogen zu werden, umfassend mindestens eine Querachse (2), die mit zwei Rädern (3) durch zwei seitliche Aufhängungsarme verbunden ist, einen Balken (4) zu ihrer Befestigung am Fahrzeug, einen Kasten (6), der auf der Achse und dem Balken montiert ist und einen rechteckigen Rahmen (7) aufweist, der einen Boden (8) und Seitenwände (10) trägt, wobei der Rahmen zwei parallele Längsträger (11a, 11b), eine vordere Querstrebe (12) und eine hintere Querstrebe (13) hat, wobei die Längsträger (11a, 11b) und die Querstreben (12, 13) aus Metallprofilen (14) hergestellt und an ihren aneinander grenzenden Enden mit Hilfe von Winkelstücken (30) verbunden sind, die zwei senkrechte Arme (31a, 31b) aufweisen, die sich in die aneinander grenzenden Enden einfügen und die ferner eine durchgehende Öffnung (35) senkrecht zur Ebene der Arme aufweisen, wobei die Längsträger (11a, 11b) und die Querstreben (12, 13) auf ihrer Innenseite einen Flügel (20) umfassen, der sich zum Inneren des Rahmens (7) erstreckt und dazu bestimmt ist, den Boden (8) zu tragen, **dadurch gekennzeichnet, daß** die Unter- und Oberseite der Längsträger und der Querstreben eine Nut (15a, 15b) umfassen, die in einer Rille (16a, 16b) mündet und Köpfe (17) von Bolzen und die unteren Ränder der Seitenwände aufnehmen und drehfest stellen kann, und **dadurch**, daß er ferner vier röhrenförmige Winkelträger (9) aufweist, deren untere Enden sich in die Öffnungen (35) der Winkelstücke (30) einfügen, wobei die Träger (9) zwei vertikale Nuten (51a, 51b) in orthogonalen Ebenen aufweisen, die dazu bestimmt sind, die Seitenränder der Seitenwände (10) aufzunehmen.

2. Anhänger nach Anspruch 1, **dadurch gekennzeichnet, daß** die Träger (9) aus einem Profil (50) hergestellt sind, das zwei orthogonale Nuten (51a, 51b) aufweist, und daß sie an ihrem unteren Ende mit einem Stück (40) zur Montage auf einem Winkelstück (30) versehen sind.

3. Anhänger nach Anspruch 2, **dadurch gekennzeichnet, daß** das Montagestück (40) einen unteren Teil (40a), der sich in die Öffnung (35) eines Winkelstücks (30) einfügt, und einen oberen Teil (40b) aufweist, der sich in das untere Ende eines Profils (50) eines Trägers (9) einfügt.

4. Anhänger nach Anspruch 3, **dadurch gekennzeichnet, daß** das Montagestück (40) Winkelpositioniermittel (41, 47) und Clipsmittel (43a, 43b, 48a, 48b) aufweist, die mit entsprechenden Winkelpositioniermitteln (42, 55) und Clipsmitteln (57a, 57b) zusammenwirken, die auf den Winkelstücken (30) und den unteren Enden der Trägerprofile (9) vorgesehen sind.

5. Anhänger nach Anspruch 4, **dadurch gekennzeichnet, daß** die Winkelpositionierungsmittel eine vertikale Nut (42, 47), die auf einem der Stücke vorgesehen ist, und eine Ausstülpung (41, 55), die auf dem anderen Stück vorgesehen ist, umfassen.

6. Anhänger nach einem der Ansprüche 4 oder 5, **dadurch gekennzeichnet, daß** die Clipsmittel eine Ausstülpung (48a) umfassen, die auf einer elastischen Zunge (49a) des Montagestücks (40) ausgebildet ist und die in ein Loch (57a, 57b) oder einen Schlitz eindringen kann, der im Trägerprofil (9) oder im Winkelstück (30) vorgesehen ist.

7. Anhänger nach einem der Ansprüche 1 bis 6, **dadurch gekennzeichnet, daß** die Seitenwände (10) an ihrem unteren Rand (70) Mittel (71) aufweisen, die in der oberen Nut (15b) eines Längsträgers (11a, 11b) oder einer Querstrebe bei der Montage gleiten können.

8. Anhänger nach Anspruch 7, **dadurch gekennzeichnet, daß** die Seitenwände aus einem Blech ausgeführt sind, das derart geformt ist, daß es horizontale Versteifungswellungen (72a) aufweist.

9. Anhänger nach Anspruch 7, **dadurch gekennzeichnet, daß** die Seitenwände aus einer Vielzahl von Profilen hergestellt sind, die sich übereinander fügen.

10. Anhänger nach Anspruch 7, **dadurch gekennzeichnet, daß** die Seitenwände aus Holzplatten hergestellt sind, die sich in eine Nut (74) einfügen, die im oberen Teil der Gleitmittel (71) vorgesehen ist, die in der oberen Nut der Längsträger oder der Querstreben gleiten können.

11. Anhänger nach Anspruch 10, **dadurch gekennzeichnet, daß** die Mittel (71), die gleiten können, aus einem Profil (75) hergestellt sind.

12. Anhänger nach einem der Ansprüche 1 bis 11, **dadurch gekennzeichnet, daß** er Zwischenquerstreben (12a) umfaßt, wobei die Längsträger (11a, 11b) an ihrer Innenseite unter den Flügeln (20) eine Vielzahl von Öffnungen aufweisen, um die Enden dieser Zwischenquerstreben (12a) aufzunehmen, so daß die Flügel (20) auf der Oberseite dieser Zwischenquerstreben (12a) aufliegen.

13. Anhänger nach Anspruch 12, **dadurch gekennzeichnet, daß** die Öffnungen für die Aufnahme der Enden der Zwischenquerstreben (12a) derart ausgeführt sind, daß diese Enden (12a) am Boden der unteren Nut (15a) der Längsträger (11a, 11b) aufliegen.

14. Anhänger nach einem der Ansprüche 1 bis 13, **dadurch gekennzeichnet, daß** die Längsträger (11a, 11b) durch Längsstützen (80a, 80b) verstärkt sind, die beiderseits der Achse unter den Längsträgern angeordnet und an diesen letztgenannten durch Bolzen befestigt sind, wobei die Stützen (80a, 80b) mit einer Achsplatte (81) verbunden sind, die derart ausgeführt ist, daß sie eine einzige Stütze unter der Platte des Anhängers bildet.

15. Anhänger nach einem der Ansprüche 1 bis 14, **dadurch gekennzeichnet, daß** die Seitenwände (10, 10a) und die Träger (9) abnehmbar sind.

16. Anhänger nach einem der Ansprüche 1 bis 15, **dadurch gekennzeichnet, daß** die durchgehenden Öffnungen (35) des Rahmens (7) des Anhängers verwendet werden können, um Ständerelemente (100) nach der Abnahme der Winkelträger (9) einzuführen, um das Stapeln mehrere Anhänger zu ermöglichen.
